# EUROPÄISCHE PATENTSCHRIFT

(11) **EP 2 302 433 B1**
(45) Veröffentlichungstag und Bekanntmachung des Hinweises auf die Patenterteilung: **25.04.2018**
(21) Anmeldenummer: 10009459.8
(22) Anmeldetag: 10.09.2010
(51) Int. Cl.: G02B 7/02, G02B 7/08, B23K 26/02

(54) **Laserbearbeitungskopf mit einem Einschub zur Halterung einer Optik**
Laser machining head with drawer for holding a lens
Tête de traitement laser avec encastrement destiné au support d'un système optique

(30) Priorität: 25.09.2009 DE 202009012924 U
(43) Veröffentlichungstag der Anmeldung: 30.03.2011
(73) Patentinhaber: Precitec GmbH & CO. KG, 76571 Gaggenau-Bad Rotenfels (DE)
(72) Erfinder: Spörl, Georg, 76287 Rheinstetten (DE); Loose, Christian, 76571 Gaggenau (DE)
(74) Vertreter: Ter Meer Steinmeister & Partner

(56) Entgegenhaltungen:
- EP-A1- 1 643 284
- EP-A1- 1 716 963
- EP-A2- 0 469 532
- WO-A1-2004/086595
- CA-A1- 2 251 243
- DE-A1- 3 208 380
- JP-A- 2009 189 091
- US-A- 5 702 622
- US-A1- 2005 184 036

## Beschreibung

Die Erfindung betrifft einen Einschub zur Halterung einer Optik, insbesondere eine Fokussierungsoptik, in einem Laserbearbeitungskopf sowie einen Laserbearbeitungskopf, der einen solchen Einschub umfasst.

Bei der Bearbeitung eines Werkstücks mittels eines Laserbearbeitungskopfes, insbesondere beim Laserschneiden, wird üblicherweise ein Laserbearbeitungskopf mit einem Gehäuse vorgesehen, in welches ein Einschub mit einer Fokussierungsoptik eingeführt ist, wobei ein durch den Laserbearbeitungskopf zu einer Schneiddüse hindurchlaufende Laserstrahl durch eine in dem Einschub gehaltene Optik so fokussiert wird, dass ein Werkstück bearbeitet werden kann. Der Einschub mit der Optik zur Fokussierung des Laserstrahls ist hierbei so aufgebaut, dass die Optik relativ zum Einschub verstellbar ist, wobei einerseits die Optik in einer Ebene senkrecht zum Laserstrahl verstellt werden kann und andererseits eine Verstellvorrichtung vorgesehen ist, mit welcher die Optik in Längsrichtung des Laserstrahls eingestellt werden kann.

So ist aus der DE 295 07 189 U1 ein Anschlusskopf zur Bearbeitung eines Werkstücks mittels eines Laserstrahls bekannt, der ein Gehäuse und einen seitlich in das Gehäuse einführbaren Einschub mit einer Fokussierungsoptik aufweist. Ein Verstellring kann durch eine Ausnehmung einer Frontplatte des Einschubs von außen gedreht werden, um die Fokussierungsoptik nach oben oder nach unten zu verschieben. Bei der Drehung des Verstellrings wird ein Horizontalflansch mitgedreht. Der Horizontalflansch weist ein Innengewinde auf, welches mit einem Außengewinde eines Verstellzylinders in Eingriff steht. In dem Verstellzylinder ist die Fokussierungsoptik montiert. Der Verstellzylinder ist mittels eines Langschlitzes in Laserstrahlrichtung drehfest gelagert und in Axialrichtung entlang des Laserstrahl verschiebbar. Wird der Verstellring gedreht, so nimmt er über den Horizontalflansch den Verstellzylinder entsprechend mit, was in Folge des Eingriffs der Gewinde zu einer Axialverschiebung des Linsenhalters führt. Je nach Drehrichtung des Verstellrings wird der Linsenhalter und mit ihm die Fokussierungsoptik nach oben oder nach unten verschoben.

Die DE 38 14 985 A1 beschreibt ein weiteres Laserbearbeitungswerkzeug. Hierbei ist eine Linse in einer Linsenhalterung relativ zu einer Düse sowohl in axialer als auch in radialer Richtung verschiebbar gelagert. Zu diesem Zweck wird die Linsenhalterung mit Hilfe einer Feder von unten gegen eine Gleitfassung gepresst, die innerhalb der Außenwand mit Hilfe einer Stellmutter axial verstellbar ist. Für die radiale Justierung werden Stellschrauben in der Gleitfassung betätigt.

Bei den bekannten Laserbearbeitungsköpfen erfolgt also eine Verstellung einer Fokussieroptik in Längsrichtung des Laserstrahls über eine Umsetzung von einer Drehbewegung in eine Axialbewegung nach dem Spindelprinzip. Bei dieser Übertragung von einer rotierenden Bewegung auf eine Axialbewegung entsteht ein Reibkontakt zwischen dem mit einem Außengewinde versehenen Linsenhalter und dem mit einem Innengewinde versehenen Verstellring, wobei Abrieb entstehen kann, welcher zu einer Verschmutzung der Fokussierungsoptik führt. Darüber hinaus werden in der Regel für einen besseren Gleitkontakt Schmiermittel eingesetzt, welche ebenfalls zu einer Verschmutzung der Fokussierungsoptik beitragen können.

Bei dem Betrieb des Laserbearbeitungskopfes tritt aufgrund der Erwärmung der Fokussierungsoptik eine Fokuslagenverschiebung in Längsrichtung des Laserstrahls auf. Diese Fokuslagenverschiebung in Laserstrahlrichtung muss bei den bekannten Laserbearbeitungsköpfen manuell nachgestellt werden, wodurch der Betrieb des Laserbearbeitungskopfes unterbrochen werden muss.

Die US 5,702,622 A nimmt die Priorität der DE 295 07 189 U in Anspruch, die eingangs bereits erläutert wurde.

Die EP 0 469 532 A2 zeigt eine optische Vorrichtung, insbesondere ein Zoomobjektiv, die bzw. das mit einer Antriebseinheit zur Bewegung einer Linse versehen ist. Die Antriebseinheit umfasst einen elektrischen Linearmotor, der ein an einer Objektivfassung befestigtes Statorjoch umfasst, in das zwei Spulen eingelegt sind. Eine Linse ist in einem magnetisierten Halteelement angeordnet. Das magnetisierte Halteelement, das den Läufer bildet, ist dabei gleitend im Statorjoch geführt. Die Innenseite der Läuferspule und die Außenseite des inneren Statorjochs ist poliert, um ein entsprechendes Gleitlager zu bilden.

Aus der US 2005/0814036 A1 ist eine Laserbearbeitungsvorrichtung zur Ausbildung von Mikrostrukturen auf Wafern bekannt. Die Objektivlinse und die Zoomlinse werden auf Luftlagerschlitten gehalten und mit Hilfe von Schwingspulenantrieben fein positioniert, um Lage und Größe des Laserpunktes einzustellen.

Die EP 1 643 284 A1 betrifft eine Vorrichtung zur Fokussierung eines Laserstrahls mit einer ersten und einer zweiten Teleskopanordnung. Um die Fokuslage relativ zur Brennebene der fokussierenden Linse zu variieren, können die Linsen der eingangsseitig angeordneten zweiten Teleskopanordnung relativ zueinander in Strahlrichtung verschoben werden. Dabei ist zur Verschiebung der beiden Linsen der zweiten Teleskopanordnung ein Linearantrieb vorgesehen, der in nicht dargestellter Weise als Tauchspulenantrieb ausgebildet ist.

Die CA 2 251 243 A1 beschreibt, dass es zur Bewegung einer Fokussierlinse in einem Laserbearbeitungskopf motorgetriebene, piezoelektrische und elektromagnetische Aktuatormechanismen gibt. Bei Aktuatoren, die das elektromagnetische Prinzip nutzen, können sich gegenüber Magneten bewegende Spulen oder Schwingspulen eingesetzt werden. Bei dem dargestellten Ausführungsbeispiel ist die Spule, die die Linse lagert, ihrerseits in einem Magneten gelagert.

Die WO 2004/086595 A1 betrifft einen Wanderfeld-Linearmotor, bei dem ein ortsfester Stator drei um ein Hüllrohr gewickelte Spulen aufweist. Ein Läufer, der von einer Gleithülse gebildet ist, weist einen axial magnetisierten Permanentmagneten auf, der zwischen Läuferpolschuhen angeordnet ist. Die Anordnung von Permanentmagnet und Läuferpolschuhen trägt die zu verschiebende Linse. Bei dieser Vorrichtung dient das Hüllrohr und die Gleithülse zur Führung des Läufers.

Der Erfindung liegt die Aufgabe zugrunde, einen Laserbearbeitungskopf mit einem Einschub zur Halterung einer Fokussierungsoptik zu schaffen, bei dem eine Verschmutzung der Optik reduziert und eine Fokuslage der Optik in einfacher und schneller Weise eingestellt werden kann.

Diese Aufgabe wird durch den Laserbearbeitungskopf nach Anspruch 1 gelöst. Vorteilhafte Ausgestaltungen und Weiterbildungen der Erfindung sind in den Unteransprüchen dargelegt.

Erfindungsgemäß wird ein Laserbearbeitungskopf zur Bearbeitung eines Werkstücks mit einem Laserstrahl mit einem Einschub zur Halterung einer Optik geschaffen, wobei die Optik relativ zum Einschub über Verstellmittel verschiebbar ist. Hierbei umfassen die Verstellmittel erfindungsgemäß zur Verschiebung der Optik in Längsrichtung des Laserstrahls eine Linearverstellvorrichtung mit einem Synchron-Linearmotor mit berührungsfreiem Antrieb, insbesondere mit einem permanentmagneterregten Synchron-Linearmotor. Durch die Verwendung eines Synchron-Linearmotors kann die Fokussierungsoptik, abgesehen von einer Reibung an Führungselementen, welche minimiert werden kann, im Wesentlichen reibungsfrei verschoben werden. Darüber hinaus ist eine schnelle und genaue automatische Einstellung der Lage der Fokussierungsoptik in Längsrichtung des Laserstrahls mittels eines solchen Motors möglich.

Erfindungsgemäß ist also ein Laserbearbeitungskopf mit einem Einschub vorgesehen, welcher eine Fokussierlinse sowohl in einer Ebene senkrecht zur Laserstrahlrichtung als auch in Längsrichtung des Laserstrahls verstellen kann, wobei die Verstellung in Z-Richtung entlang des Laserstrahls mittels eines elektrischen Synchron-Linearmotors erfolgt. Unter Synchron-Linearmotor soll dabei ein elektrischer Motor verstanden werden, bei welchem ein konstant magnetisierter Läufer synchron von einem bewegten magnetischen Feld im umgebenden Stator mitgenommen wird, wobei in gleicher Weise der Stator konstant magnetisiert sein und der Läufer ein bewegtes magnetisches Feld aufweisen kann. Somit läuft der lineare Synchronmotor synchron zum angelegten magnetischen Feld, also zu einem an eine Spule angelegten Strom. Unter permanentmagneterregter Synchron-Linearmotor soll ein Motor verstanden werden, bei welchem entweder der Stator oder der Läufer (Aktuator) als zumindest ein Permanentmagnet ausgebildet ist.

Für den Einsatz des Laserbearbeitungskopfes in Schneid- oder Schweißprozessen ist es hierbei zweckmäßig, wenn die Optik eine Fokussieroptik zur Fokussierung des Laserstrahls auf das zu bearbeitende Werkstück ist.

In einer sehr einfachen Ausgestaltung der erfindungsgemäßen Linearverstellvorrichtung ist der permanentmagneterregte Synchron-Linearmotor als Lineardirektantrieb ausgestaltet, wobei der permanentmagneterregte Synchron-Linearmotor einen Stator mit zwei Permanentmagneten und einen Aktuator mit einer Spule umfasst, der berührungsfrei am Stator entlangläuft.

In einer fortgeschrittenen Ausgestaltung der Linearverstellvorrichtung kann der Linearmotor auch als Schrittmotor ausgebildet sein, wobei zur Bildung einer funktionsfähigen Einheit vorteilhafterweise der permanentmagneterregte Synchron-Linearmotor eine Anzahl N von Permanentmagneten und eine Anzahl M aus Paaren von N/M umfasst, wobei N/M gleich 2/3, 4/3, 10/6 oder 14/6 ist.

Für die reale Umsetzung des permanentmagneterregten Synchron-Linearmotors ist es zweckmäßig, wenn die zumindest zwei Permanentmagneten nebeneinander angeordnet und alternierend gepolt sind und die Spulenachse der zumindest einen Spule entlang der Polungsrichtung der zumindest zwei Permanentmagneten angeordnet ist.

Für eine stabile Lagerung der Fokussierungsoptik ist es von Vorteil, wenn die Linearverstellvorrichtung weiter eine Linearführung aufweist, die dem Synchron-Linearmotor gegenüberliegend angeordnet ist, wobei zwischen Linearführung und Synchron-Linearmotor eine Halterung zur Aufnahme einer Linsenhalters montiert und in Verstellrichtung der Linearführung und des Synchron-Linearmotors geführt ist. Hierbei weist die Linearführung vorteilhafterweise eine Führungsstange und eine Führungsbuchse auf, in welcher die Führungsstange gleitend aufgenommen ist.

Für eine möglichst abriebfreie und reibungsarme Lagerung ist es besonders von Vorteil, wenn die Linearführung als Keramikgleitlager ausgeführt ist.

Um die Fokussierungsoptik einfach austauschen zu können, ist es zweckmäßig, wenn die Halterung zur Aufnahme des Linsenhalters eine zylindrische Ausnehmung mit einem Innengewinde aufweist und die Linsenhalterung zylinderförmig mit einem Außengewinde ausgebildet ist, wobei die Linsenhalterung mit ihrem Außengewinde in das Innengewinde der Halterung einschraubbar ist.

In einer besonders einfachen Ausgestaltung der Erfindung weist der Linsenhalter eine hohlzylindrische Ausnehmung mit einem Schulterabschnitt auf, auf welchem die Optik gelagert ist.

Erfindungsgemäß sind die Verstellmittel des Einschubs zweckmäßigerweise ferner zur Verschiebung der Optik senkrecht zur Längsrichtung des Laserstrahls ausgebildet.

Hierfür weist der Einschub vorteilhafterweise ferner eine Frontplatte und einen Rahmen auf, der die erste Verstellvorrichtung aufnimmt, wobei der Rahmen schwenkbar an der Frontplatte gelagert ist.

Hierbei ist der Rahmen vorteilhafterweise mit fester Axialposition schwenkbar an der Frontplatte des Einschubs um eine Achse gelagert, welche im Abstand parallel zur Längsrichtung des Laserstrahls verläuft.

Dabei kann diese Achse fest mit dem Rahmen verbunden und seitlich passend zwischen Schenkeln geführt sein, welche von der Rückseite der Frontplatte abstehen. Somit ist einerseits eine Verschwenkung des Rahmens und mit diesem der Fokussierungsoptik um die genannte Achse möglich, andererseits aber auch eine Verschiebung des Rahmens senkrecht zur Längsrichtung des Laserstrahls, da die Achse auch zwischen den genannten Schenkeln verschoben werden kann, die parallel zueinander verlaufen und einen solchen Abstand voneinander aufweisen, der dem Durchmesser der Achse entspricht.

Ferner wird nach einer vorteilhaften Weiterbildung der Erfindung der Rahmen mit Hilfe von Federn gegen die Rückseite der Frontplatte gezogen, wobei die Federn zum Beispiel um den Rahmen herumgeführt und mit ihren Enden an der Rückseite der Frontplatte befestigt sein können.

Die Verstellmittel für die ebene Verschiebung der Fokussierungsoptik können dann durch die Frontplatte hindurch ragen, wobei sie zum Beispiel als Schrauben ausgebildet sein können. Vorzugsweise sind zwei in der Ebene unter einem Winkel zueinander liegende Schrauben vorhanden, die jeweils auf das Zentrum des Laserstrahls ausgerichtet sind und die genannte Achse, um die sich die Führungshülse verschwenken kann, zwischen sich aufnehmen.

Die Erfindung wird nachfolgend unter Bezugnahme auf die Zeichnung im Einzelnen beschrieben. Es zeigen:
Figur 1 eine perspektivische schematische Ansicht eines erfindungsgemäßen Laserbearbeitungskopfes mit einem Einschub;
Figur 2 eine perspektivische schematische Ansicht des erfindungsgemäßen Einschubs; und
Figur 3 eine schematische Schnittansicht in Längsrichtung des optischen Strahlengangs des Einschubs aus Figur 2.

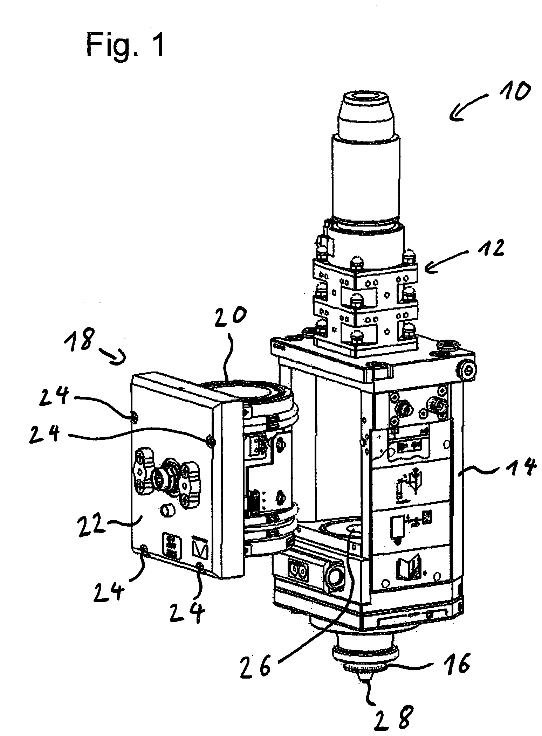

In Figur 1 ist eine schematische perspektivische Ansicht eines Laserbearbeitungskopfes 10 gezeigt, wie er mit Laserbearbeitungsmaschinen oder -anlagen verwendet wird. Hierbei wird ein von der Laserbearbeitungsmaschine kommender Arbeitslaserstrahl (nicht gezeigt), welcher mittels einer Lichtleitfaser dem Laserbearbeitungskopf 10 zugeführt und mittels einer Kollimatoroptik 12 aus der Lichtleitfaser ausgekoppelt wird, durch ein Gehäuse 14 des Laserbearbeitungskopfes 10 hindurch zu einer Düse 16 geleitet, aus welcher der Laserstrahl austritt, um ein Werkstück zu bearbeiten, insbesondere zu schneiden. Der Arbeitslaserstrahl wird hierbei für die Bearbeitung des Werkstücks mittels einer Optik fokussiert, welche in einem Einschub 18 angeordnet ist.

Der Einschub 18 weist einen Rahmen 20 mit einer hohlzylindrischen Ausnehmung und eine Frontplatte 22 auf, wobei der Rahmen 20 und die Frontplatte 22 relativ zueinander verstellbar sind, wie später noch ausführlich beschrieben werden wird. Für einen Betrieb des Laserbearbeitungskopfes 10 wird der Rahmen 20 des Einschubs 18 in das Gehäuse 14 des Laserbearbeitungskopfes 10 eingeführt und der Einschub 18 mittels Fixierschrauben 24 in der Frontplatte 22 an dem Gehäuse 14 befestigt. Im eingesetzten Zustand des Einschubs 18 liegt die zylinderförmige Ausnehmung des Rahmens 20 konzentrisch mit einer Optik des Kollimators 12 und mit einer Gehäuseausgangsöffnung 26 des Gehäuses 14, welche mit einer Düsenöffnung 28 der Düse 16 in Verbindung steht.

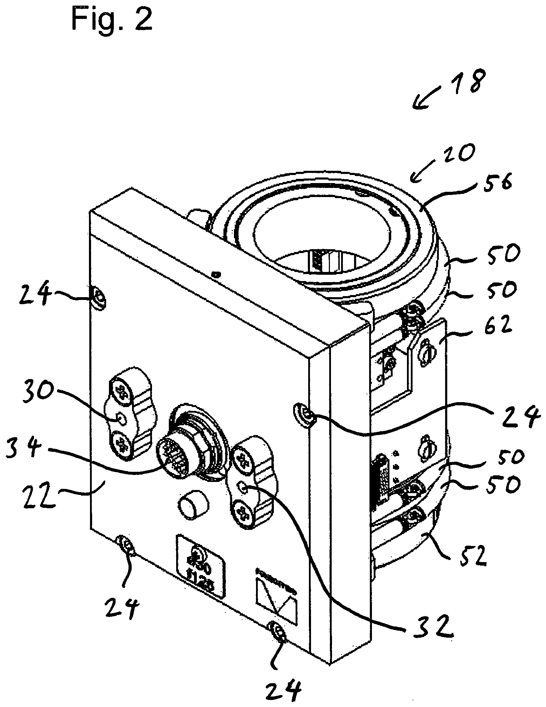

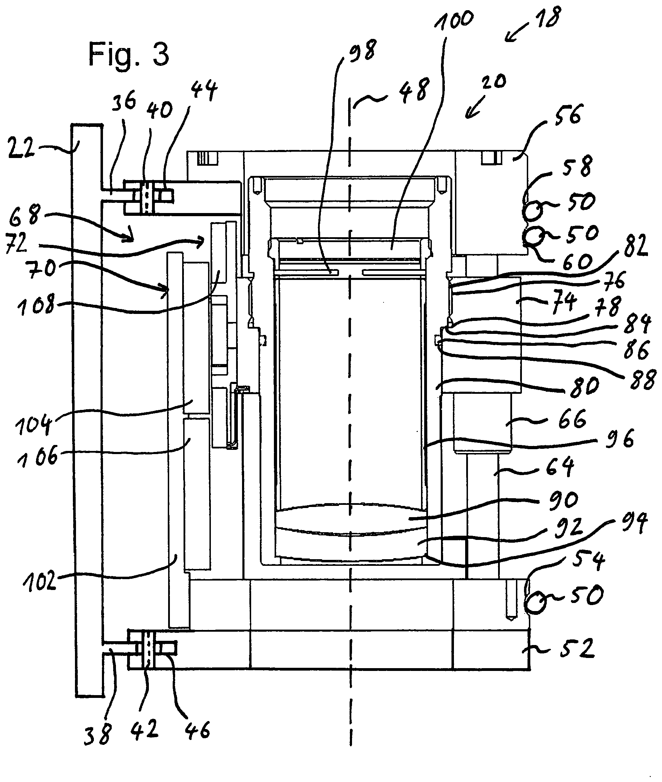

Im Folgenden soll der Aufbau des erfindungsgemäßen Einschubs 18 anhand der Figuren 2 und 3 erläutert werden.

Wie in Figur 2 gezeigt, sind in der Frontplatte 22 Verstellschrauben 30 und 32 hineingeschraubt, die zur ebenen Verstellung der Fokussierungsoptik dienen, die vom Einschub 18 getragen wird. Durch Drehen einer oder beider Verstellschrauben 30, 32 kann die Fokussierungsoptik in einer Ebene senkrecht zur Längsrichtung des Laserstrahls verschoben werden, wie noch erläutert werden wird. Darüber hinaus ist in der Frontplatte 22 eine Steckerbuchse 34 angeordnet, um eine elektrische Ansteuerung eines elektrischen Linearmotors, der noch ausführlich beschrieben werden wird, zu ermöglichen, durch welchen die Fokussierungsoptik in Längsrichtung des Laserstrahls verstellt werden kann.

Wie in Figur 3 gezeigt, weist die Frontplatte 22 an ihrer Rückseite zwei in Vertikalrichtung voneinander beabstandete Ansätze 36 und 38 auf, die im Wesentlichen U-förmig ausgebildet sind und zwei parallel zueinander verlaufende Schenkel aufweisen, deren Öffnung von der Frontplatte 22 wegweist. Diese Ansätze 36, 38 können einstückig mit der Frontplatte 22 verbunden sein. Einer befindet sich am oberen Ende der Frontplatte 22, der andere am unteren Ende der Frontplatte 22. Zwischen den beiden Schenkeln eines jeweiligen Ansatzes 36, 38 ist jeweils ein Stift 40, 42 geführt. Der Abstand der beiden parallel zueinander verlaufenden Schenkel eines jeweiligen Ansatzes 36, 38 entspricht dabei dem Durchmesser des jeweils zwischen den Schenkeln geführten Stiftes 40, 42. Die Stifte 40, 42 lassen sich somit zwischen den Schenkeln verschieben, aber auch drehen, und zwar um ihre Längsachse.

Die Ansätze 36, 38 beziehungsweise Schenkel greifen jeweils in Horizontalschlitze 44, 46 ein, die sich in einem Teil der Umfangswandung des Rahmens 20 befinden. Durch diese Horizontalschlitze 44, 46 gehen die Stifte 40, 42 vertikal hindurch, wobei die Stifte 40, 42 selbst fest in den jeweils oberen und unteren Randbereich des Rahmens 20 eingesetzt sind. In Figur 3 ist die Mittellinie des Rahmens 20 mit dem Bezugszeichen 48 versehen. Diese Mittellinie 48 verläuft in Längsrichtung des Laserstrahls, wobei also der Laserstahl koaxial zur Mittellinie 48 liegen sollte. Parallel zur Mittellinie 48 verlaufen die Stifte 40, 42 während in Ebenen jeweils senkrecht zur Mittellinie 48 die jeweiligen Schenkel der Ansätze 36, 38 liegen und auch die Schlitze 44, 46. Dabei sind die Schenkel der Ansätze 36, 38 in den Horizontalschlitzen 44, 46 in Vertikalrichtung gesehen, spielfrei geführt, also in einer Richtung parallel zur Mittellinie 48. In Längsrichtung der Mittellinie 48 lässt sich somit der Rahmen 20 nicht verschieben. Vielmehr kann der Rahmen 20 nur in einer Ebene senkrecht zur Mittellinie 48 verschoben werden beziehungsweise um die Stifte 40, 42 gedreht werden.

Mit Hilfe von Federn 50 wird der Rahmen 20 gegen die Rückwand der Frontplatte 22 gezogen. Die Federn 50 sind dabei um den Rahmen 20 herum gelegt und mit ihren Enden an der Rückwand der Frontplatte 22 befestigt (nicht gezeigt).

Mit Hilfe der bereits erwähnten Verstellschrauben 30, 32 kann nunmehr entgegen der Kraft der Federn 50 der Rahmen 20 in einer Ebene senkrecht zur Mittellinie 48 verschoben werden. Dabei lassen sich die Stifte 40, 42 im Bereich zwischen den jeweiligen Schenkeln der Ansätze 36, 38 ebenfalls verschieben oder um ihre Längsachse drehen. Die Verstellschrauben 30, 32 könne beispielsweise Madenschrauben sein, die so ausgerichtet sind, dass sie unter 45 Grad zueinander verlaufen ohne im Wesentlichen auf das Zentrum des Rahmens 20 ausgerichtet sind. Sie schlagen mit ihren vorderen Stellflächen gegen die Umfangswandung des Rahmens 20 (in der Schnittansicht in Fig. 3 nicht zu sehen).

Der Rahmen 20 weist einen ringförmigen Sockel 52 mit einer umfangsseitigen Führungsnut 54 auf in dem eine der Federn 50 eingebettet ist, um ein Abrutschen der Feder in Richtung der Mittellinie 48 zu vermeiden. Dem ringförmigen Sockel 52 gegenüberliegend ist ein ringförmiger Deckel 56 angeordnet, der zwei benachbarte umfangsseitige Nuten 58, 60 aufweist, in welchen zwei der Federn 50 geführt sind. Wie in Figur 2 gezeigt, sind der ringförmige Deckel 56 und der ringförmige Sockel 52 durch seitlich angeordnete Stützelemente 62 so miteinander verbunden, dass die entsprechenden Ringachsen des Sockels 52 und des Deckels 56 zusammenfallen und somit einen zylindrischen Kanal durch den Rahmen 20 bilden.

An der der Frontplatte 22 abgewandten Seite des Rahmens 20 ist eine Führungsstange 64 in Richtung der Mittellinie 48 angeordnet und mit einem Ende mit dem ringförmigen Sockel 52 und mit ihrem anderen Ende mit dem ringförmigen Deckel 56 fest verbunden. An der Führungsstange 64 ist eine Führungsbuchse 66 gleitend gelagert, so dass die Führungsbuchse 66 in Richtung der Mittellinie 48 und in Längsrichtung des Laserstrahls verschiebbar ist.

Auf der der Frontplatte 22 zugewandten Seite des Rahmens 20 ist ein permanentmagneterregter Synchron-Linearmotor 68 mit einem mit dem ringförmigen Sockel 52 verbundenen Stator 70 und einem dem Stator 70 benachbart angeordneten Aktuator 72 angeordnet. Der genaue Aufbau und die Funktionsweise des permanentmagneterregten Synchron-Linearmotors 68 soll weiter unten genauer beschrieben werden. Der Aktuator 72 und die Führungsbuchse 66 sind beide mit einer ringförmigen Halterung 74 in der Art verbunden, dass durch Betrieb des Synchron-Linearmotors 68 mittels der Führung der Führungsbuchse 66 die ringförmige Halterung 74 entlang der Mittellinie 48 des Rahmens 20 in Längsrichtung des Laserstrahls nach oben und nach unten bewegt werden kann.

Die ringförmige Halterung 74 weist an ihrer Strahleingangsseite ein Innengewinde 76 mit einem abschließenden Schulterabschnitt 78 auf, wobei ein zylinderförmiger Linsenhalter 80 mit einem Außengewinde 82 in die ringförmige Halterung 74 eingeschraubt ist, und wobei ein Schulterabschnitt 84 des Linsenhalters 80 gegen die entsprechende Schulter 78 der ringförmigen Halterung 74 stößt. Zwischen der ringförmigen Halterung 74 und dem Linsenhalters 80 ist ferner ein Dichtungsring 86 in einer umfangsseitigen Nut 88 des Linsenhalters 80 so angeordnet, dass er den Kontakt zwischen dem Linsenhalter 80 und der ringförmigen Halterung 76 abdichtet, um ein Entweichen von Schneidgas, welches mit dem Laserstrahl aus der Düse 16 (Figur 1) zum Ausblasen von aufgeschmolzenem Material herausgeführt und in einem unteren Teil des Gehäuses 14 einem Kanal zwischen der Öffnung 26 und der Öffnung 28 zugeführt wird, zu vermeiden.

Der Linsenhalter 80 ist hohlzylindrisch ausgeführt und nimmt in seinem unteren Teil eine Fokussierungsoptik 90, 92 auf. Diese Fokussierungsoptik 90, 92 kann aus einer oder mehreren Linsen bestehen und ist von unten in eine entsprechende vergrößerte Öffnung des Linsenhalters 80 eingesetzt. Umfangsseitig ruht die Fokussierungsoptik 90, 92 auf einer entsprechenden Schulter 94 des Linsenhalters 80. Zur Sicherung der Fokussierungsoptik 90, 92 ist eine Linsenhülse 96 in den Linsenhalter 80 eingesetzt und wird mittels eines Federrings 98, der an der Strahleintrittsseite des Rahmens 20 gegen einen Gewindering 100 stößt, gegen die Fokussierungsoptik 90, 92 gedrückt, um die Fokussierungsoptik 90, 92 im Linsenhalter 80 zu sichern. Zur Positionierung von Linsen kann die Fokussierungsoptik 90, 92 auch zusätzliche Abstandsringe aufweisen.

Durch die feste Verbindung zwischen Fokussieroptik 90, 92, dem Linsenhalter 80 und der ringförmigen Halterung 74 kann die Fokussierungsoptik 90, 92 entlang der Mittellinie 48 und bei einem eingesetzten Einschub 18 in dem Laserbearbeitungskopf 10 entlang der Längsrichtung des Laserstrahls aufgrund der Führung durch die Führungsbuchse 66, die auf der Führungsstange 64 gleitend gelagert ist, verschoben werden. Die Linearführung 64, 66 aus Führungsstange 64 und Führungsbuchse 66 ist jedoch nicht auf die gezeigte Anordnung aus Führungsstange 64 und Führungsbuchse 66 beschränkt, so können beispielsweise auch mehrere Führungsstangen und Führungsbuchsen umfangsseitig des Rahmens 20 zwischen dem ringförmigen Sockel 52 und dem ringförmigen Deckel 56 vorgesehen sein, um eine stabile Führung der Fokussierungsoptik 90, 92 in Längsrichtung des Laserstrahls zu ermöglichen. Weiter ist die Linearführung 64, 66 nicht darauf beschränkt, dass die Führungsstange 64 einen kreisrunden Querschnitt aufweist, es ist auch vorstellbar, dass die Führungsstange 64 einen beliebigen Querschnitt aufweist, wobei die Führungsbuchse 66 einen zu dem Querschnitt der Führungsstange 64 entsprechenden Querschnitt aufweist, sodass diese die Führungsstange 64 aufnehmen und an der Führungsstange 64 entsprechend gleiten kann. Die Linearführung 64, 66 ist vorzugsweise aus einem Material gefertigt, welches ein möglichst abriebfreies Gleiten ermöglicht, also beispielsweise Keramik. Hier ist ein Gleitlager aus Siliziumkarbid oder Siliziumnitrit besonders bevorzugt.

Im Folgenden sollen nun der Aufbau des permanentmagneterregten Synchron-Linearmotors 68 genauer beschrieben werden.

Der Aktuator 72 wird durch die Linearführung 64, 66 so an dem Stator 70 entlang geführt, dass er stets in einem geringen Abstand berührungsfrei an dem Stator 70 entlang läuft. Der Stator 70 weist einen Eisenkern 102 auf, welcher mit dem ringförmigen Sockel 52 verbunden ist. An dem Eisenkern 102 sind ein erster Magnet 104 und ein zweiter Magnet 106 in Richtung der Mittellinie 48 benachbart zueinander angeordnet. Die Polungsrichtung des ersten Magneten 104 und des zweiten Magneten 106 verläuft senkrecht zur Mittellinie 48 in Richtung zu der Frontplatte 22, wobei der erste Magnet 104 und der zweite Magnet 106 unterschiedlich gepolt sind. Der Aktuator 72 weist eine Spule 108 auf, die dem ersten Magneten 104 und dem zweiten Magneten 106 gegenüberliegend angeordnet ist und beide Magneten 104, 106 überlappt. Die Spulenachse der Spule 108 verläuft in Polungsrichtung der Permanentmagneten 104, 106. Abhängig von einem angelegten Strom, welcher durch die Spule 108 fließt, wird eine Kraft entweder in der einen oder in der anderen Richtung entlang der Mittellinie 48 erzeugt, sodass die Fokussieroptik 90, 92 entsprechend in Längsrichtung des Laserstrahls bewegt werden kann. Bei diesem sehr einfachen Lineardirektantrieb, welcher nur aus zwei Permanentmagneten 104, 106 und einer Spule 108 besteht, kann zusätzlich ein Positionsmesser (nicht gezeigt) vorgesehen sein, welcher die Lage in Längsrichtung der Mittellinie 48 der ringförmigen Halterung 74 bestimmt, um somit ein genaues Einstellen der Lage der Fokussieroptik 90, 92 zu ermöglichen.

Neben dem in Figur 3 gezeigten Ausführungsbeispiel des Einschubs 18 mit dem permanentmagneterregten Synchron-Linearmotor 68 aus zwei Permanentmagneten 104, 106 und einer Spule 108 kann jedoch auch ein permanentmagneterregter Synchron-Linearmotor vorgesehen werden, welcher eine Anzahl N von Permanentmagneten und eine Anzahl M von Spulen als Paare von N/M umfasst, wobei N/M gleich 2/3, 4/3, 10/6 oder 14/6 ist. Der vollständige Motor kann hier als Folge von Elementarmaschinen aufgefasst werden, von denen jede für sich eine funktionsfähige Einheit mit N Permanentmagneten und M Spulen bildet. Durch Anlegen unterschiedlicher Ströme an die entsprechenden Spulen kann analog zu einem Schritt-Drehmotor ein linearer Schrittmotor verwirklicht werden, wodurch die Fokussierungsoptik 90, 92 genau und schnell an eine vorbestimmte Position entlang der Mittellinie 48 und bei eingesetztem Einschub 18 in dem Laserbearbeitungskopf 10 in Längsrichtung des Laserstrahls gefahren werden kann. Bei dem Einsatz von mehreren Permanentmagneten und mehreren Spulen sind die nebeneinander angeordneten Permanentmagneten alternierend gepolt und die Spulenachse der zumindest einen Spule entlang der Polungsrichtung der Permanentmagneten angeordnet.

Aufgrund des berührungsfreien Antriebs des Linearmotors 68 kann aufgrund der Auswahl von entsprechenden Gleitlagern für die Linearführung 64, 66 eine nahezu abriebfreie Verstellung der Fokussierungsoptik 90, 92 erreicht werden, wodurch eine Verschmutzung der Fokussierungsoptik 90, 92 reduziert wird. Darüber hinaus hat der Einsatz des permanentmagneterregten Synchron-Linearmotors 68 den Vorteil, dass auf einen Spindelantrieb verzichtet werden kann, wodurch eine Verschmutzung der Fokussierungsoptik 90, 92 mittels eingesetzten Schmiermitteln nicht auftritt.

Der erfindungsgemäße Einschub ist darüber hinaus in seinen Abmessungen so ausgestaltet, dass er einen aus dem Stand der Technik bekannten Einschub, bei welchem die Verstellung in Längsrichtung des Laserstrahls manuell durch einen Verstellring erfolgt, ersetzen kann, wodurch eine Aufrüstung von einem bekannten Einschub auf den erfindungsgemäßen Einschub 18, welcher in den Laserbearbeitungskopf 10 passt, leicht erfolgen kann.

Somit wird also erfindungsgemäß ein Einschub 18 zur Haltung einer Optik 90, 92 in einem Laserbearbeitungskopf 10 vorgeschlagen, durch den eine Verstellung einer Fokussierungsoptik 90, 92 in Längsrichtung des Laserstrahls in einfacher Weise, nahezu abriebfrei, schnell und genau erfolgen kann, wodurch einerseits eine Verschmutzung der Optik vermieden und andererseits eine einfache und automatische Nachregelung der Fokuslage der Fokussierungsoptik 90, 92 bei einer Erwärmung der Fokussierungsoptik 90, 92 erreicht werden kann.

## Patentansprüche

1. Laserbearbeitungskopf (10) zum Schneiden oder Schweißen eines Werkstücks mittels eines Laserstrahls, mit einem Gehäuse (14) und einem Einschub (18) zur Halterung einer Fokussieroptik (90, 92), der in das Gehäuse (14) seitlich eingeführt ist, wobei die im Einschub (18) angeordnete Fokussieroptik (90, 92) zur Fokussierung des Laserstrahls auf das zu bearbeitende Werkstück relativ zum Einschub (18) über Verstellmittel in Längsrichtung des Laserstrahls verschiebbar ist, **dadurch gekennzeichnet, dass** die Verstellmittel zur Verschiebung der Fokussieroptik (90, 92) eine Linearverstellvorrichtung (64, 66, 68) umfassen, die einen Synchron-Linearmotor (68) mit berührungsfreiem Antrieb aufweist.

2. Laserbearbeitungskopf (10) nach Anspruch 1, **dadurch gekennzeichnet, dass** der Synchron-Linearmotor (68) ein permanentmagneterregter Synchron-Linearmotor ist, der einen Stator (70) mit zwei Permanentmagneten (104, 106) und einen Aktuator (72) mit einer Spule (108) umfasst, der berührungsfrei am Stator (70) entlang läuft.

3. Laserbearbeitungskopf (10) nach Anspruch 1 oder 2 **dadurch gekennzeichnet, dass** der Synchron-Linearmotor (68) ein permanentmagneterregter Synchron-Linearmotor ist und eine Anzahl N von Permanentmagneten und eine Anzahl M von Spulen als Paare von N/M umfasst, wobei N/M gleich 2/3, 4/3, 10/6 oder 14/6 ist.

4. Laserbearbeitungskopf (10) nach Anspruch 3, **dadurch gekennzeichnet, dass** der permanentmagneterregte Synchron-Linearmotor (68) als linearer Schrittmotor ausgebildet ist.

5. Laserbearbeitungskopf (10) nach einem der Ansprüche 2 bis 4, **dadurch gekennzeichnet, dass** die zumindest zwei Permanentmagneten (104, 106) nebeneinander angeordnet und alternierend gepolt sind und die Spulenachse der zumindest einen Spule (108) entlang der Polungsrichtung der zumindest zwei Permanentmagneten angeordnet ist.

6. Laserbearbeitungskopf (10) nach einem der vorstehenden Ansprüche, **dadurch gekennzeichnet, dass** die Linearverstellvorrichtung (64, 66, 68) eine Linearführung (64, 66) aufweist, die dem Synchron-Linearmotor (68) gegenüberliegend angeordnet ist, wobei zwischen Linearführung (64, 66) und Synchron-Linearmotor (68) eine Halterung (74) zur Aufnahme eines Linsenhalters (80) montiert und in Verstellrichtung der Linearführung (64, 66) und des Synchron-Linearmotors (68) geführt ist.

7. Laserbearbeitungskopf (10) nach Anspruch 6, **dadurch gekennzeichnet, dass** die Linearführung (64, 66) eine Führungsstange (64) und eine Führungsbuchse (66), in welcher die Führungsstange (64) gleitend aufgenommen ist, aufweist.

8. Laserbearbeitungskopf (10) nach Anspruch 7, **dadurch gekennzeichnet, dass** die Linearführung (64, 66) als Keramikgleitlager ausgeführt ist.

9. Laserbearbeitungskopf (10) nach einem der Ansprüche 6 bis 8, **dadurch gekennzeichnet, dass** die Halterung (74) zur Aufnahme des Linsenhalters (80) eine zylindrische Ausnehmung mit einem Innengewinde (76) aufweist und die Linsenhalterung (80) zylinderförmig mit einem Außengewinde (82) ausgebildet ist, wobei die Linsenhalterung (80) mit ihrem Außengewinde (82) in das Innengewinde (76) der Halterung (74) einschraubbar ist.

10. Laserbearbeitungskopf (10) nach Anspruch 9, **dadurch gekennzeichnet, dass** der Linsenhalter (80) eine hohlzylindrische Ausnehmung mit einem Schulterabschnitt (94) aufweist, auf welchem die Fokussieroptik (90, 92) gelagert ist.

11. Laserbearbeitungskopf (10) nach einem der vorstehenden Ansprüche, **dadurch gekennzeichnet, dass** die Verstellmittel zu Verschiebung der Fokussieroptik (90, 92) senkrecht zur Längsrichtung des Laserstrahls ausgebildet sind.

12. Laserbearbeitungskopf (10) nach Anspruch 11, ferner mit einer Frontplatte (22) und einem Rahmen (20), der die Linearverstellvorrichtung (64, 66, 68) aufnimmt, wobei der Rahmen (20) schwenkbar an der Frontplatte (22) gelagert ist.

13. Laserbearbeitungskopf (10) nach Anspruch 12, **dadurch gekennzeichnet, dass** der Rahmen (26) in fester Axialposition schwenkbar an der Frontplatte (22) des Einschubs (18) um eine Achse (40, 42) gelagert ist, welche im Abstand parallel zur Längsrichtung des Laserstrahls verläuft.

14. Laserbearbeitungskopf (10) nach Anspruch 13, **dadurch gekennzeichnet, dass** die Achse (40, 42) fest mit dem Rahmen (20) verbunden und seitlich passend zwischen Schenkeln (36, 38) geführt ist, welche von der Rückseite der Frontplatte (22) abstehen.

15. Laserbearbeitungskopf (10) nach Anspruch 14, **dadurch gekennzeichnet, dass** der Rahmen (20) mit Hilfe von Federn (50) gegen die Rückseite der Frontplatte (22) gezogen wird.

16. Laserbearbeitungskopf (10) nach Anspruch 15, **dadurch gekennzeichnet, dass** die Federn (50) um den Rahmen (20) herumgeführt und mit ihren Enden an der Rückseite der Frontplatte (22) befestigt sind.

17. Laserbearbeitungskopf (10) nach einem der Ansprüche 12 bis 16, **dadurch gekennzeichnet, dass** die Verstellmittel für eine ebene Verschiebung der Fokussieroptik als durch die Frontplatte (22) hindurchragende Schrauben (30, 32) ausgebildet sind, die in der Ebene unter einem Winkel zueinander liegen und die Achse (40, 42) zwischen sich aufnehmen.

## Claims

1. A laser machining head (10) for cutting or welding a workpiece by means of a laser beam, comprising a housing (14) and an insert (18) for holding a focusing optics (90, 92) which is inserted laterally into said housing (14), wherein said focusing optics (90, 92) disposed in said insert (18) is displaceable relative to said insert (18) in the longitudinal direction of the laser beam for focusing the laser beam onto the workpiece to be machined by means of adjusting means, **characterized in that** said adjusting means comprises a linear adjusting device (64, 66, 68) having a synchronous linear motor (68) with a contactless drive for displacing said focusing optics (90, 92).

2. The laser machining head (10) according to claim 1, **characterized in that** said synchronous linear motor (68) is a permanent magnet excited synchronous linear motor comprising a stator (70) with two permanent magnets (104, 106) and an actuator (72) with a coil (108) which travels along said stator (70) without contact.

3. The laser machining head (10) according to claim 1 or 2, **characterized in that** said synchronous linear motor (68) is a permanent magnet excited synchronous linear motor and comprises a number N of permanent magnets and a number M of coils as pairs of N/M, N/M being equal to 2/3, 4/3, 10/6, or 14/6.

4. The laser machining head (10) according to claim 3, **characterized in that** said permanent magnet excited synchronous linear motor (68) is configured as a linear stepping motor.

5. The laser machining head (10) according to any one of the claims 2 to 4, **characterized in that** said at least two permanent magnets (104, 106) are arranged next to one another and poled alternately, and the coil axis of said at least one coil (108) is arranged along the poling direction of said at least two permanent magnets.

6. The laser machining head (10) according to any one of the preceding claims, **characterized in that** said linear adjusting device (64, 66, 68) has a linear guide (64, 66) which is arranged opposite said synchronous linear motor (68), wherein a holder (74) for receiving a lens holder (80) is mounted between said linear guide (64, 66) and said synchronous linear motor (68) and is guided in the adjustment direction of said linear guide (64, 66) and said synchronous linear motor (68).

7. The laser machining head (10) according to claim 6, **characterized in that** said linear guide (64, 66) has a guide rod (64) and a guide bushing (66) in which said guide rod (64) is slidably received.

8. The laser machining head (10) according to claim 7, **characterized in that** said linear guide (64, 66) is configured as a ceramic sliding bearing.

9. The laser machining head (10) according to any one of the claims 6 to 8, **characterized in that** said holder (74) for receiving said lens holder (80) has a cylindrical recess with an internal thread (76), and said lens holder (80) is formed cylindrically with an external thread (82), wherein said lens holder (80) can be screwed into said internal thread (76) of said holder (74) with its external thread (82).

10. The laser machining head (10) according to claim 9, **characterized in that** said lens holder (80) has a hollow cylindrical recess with a shoulder portion (94) on which said focusing optics (90, 92) is supported.

11. The laser machining head (10) according to any one of the preceding claims, **characterized in that** said adjusting means are configured to displace said focusing optics (90, 92) perpendicular to the longitudinal direction of the laser beam.

12. The laser machining head (10) according to claim 11, further comprising a front plate (22) and a frame (20) receiving said linear adjusting device (64, 66, 68), wherein said frame (20) is supported pivotally on said front plate (22).

13. The laser machining head (10) according to claim 12, **characterized in that** said frame (26) is supported in a fixed axial position on said front plate (22) of said insert (18) such that it can pivot about an axle (40, 42) which extends at a distance in parallel to the longitudinal direction of the laser beam.

14. The laser machining head (10) according to claim 13, **characterized in that** said axle (40, 42) is fixedly connected to said frame (20) and is guided laterally in a suitable fashion between legs (36, 38) projecting from the rear side of said front plate (22).

15. The laser machining head (10) according to claim 14, **characterized in that** said frame (20) is drawn against the rear side of said front plate (22) by means of springs (50).

16. The laser machining head (10) according to claim 15, **characterized in that** said springs (50) are guided around said frame (20) and are fastened with their ends to the rear side of said front plate (22).

17. The laser machining head (10) according to any one of the claims 12 to 16, **characterized in that** said adjusting means for a planar displacement of said focusing optics are formed as screws (30, 32) penetrating said front plate (22) which lie in the plane at an angle to one another and accommodate said axle (40, 42) between them.

## Revendications

1. Tête de traitement laser (10) pour découper ou souder une pièce au moyen d'un rayon laser, comportant un boîtier (14) et un encastrement (18) destiné au support d'une optique de focalisation (90, 92), qui est inséré latéralement dans le boîtier (14), dans laquelle l'optique de focalisation (90, 92) disposée dans l'encastrement (18) peut être déplacée par l'intermédiaire de moyens de réglage dans la direction longitudinale du rayon laser afin de focaliser le rayon laser sur la pièce à traiter relativement à l'encastrement (18), **caractérisée en ce que** les moyens de réglage pour déplacer l'optique de focalisation (90,92) comprennent un dispositif de réglage linéaire (64, 66, 68), qui présente un moteur linéaire synchrone (68) avec un entraînement sans contact.

2. Tête de traitement laser (10) selon la revendication 1, **caractérisée en ce que** le moteur linéaire synchrone (68) est un moteur linéaire synchrone excité par aimant permanent, qui comprend un stator (70) avec deux aimants permanents (104, 106) et un actionneur (72) avec une bobine (108), qui s'étend sans contact le long du stator (70).

3. Tête de traitement laser (10) selon la revendication 1 ou 2, **caractérisée en ce que** le moteur linéaire synchrone (68) et un moteur linéaire synchrone excité par aimants permanents et comprend une pluralité N d'aimants permanents et une pluralité M de bobines comme paires de N/M, dans laquelle N/M est égale à 2/3, 4/3, 10/6 ou 14/6.

4. Tête de traitement laser (10) selon la revendication 3, **caractérisée en ce que** le moteur linéaire synchrone excité par aimants permanents (68) est réalisé comme un moteur linéaire pas à pas.

5. Tête de traitement laser (10) selon une des revendications 2 à 4, **caractérisée en ce que** les au moins deux aimants permanents (104, 106) sont disposées côte à côte et polarisés en alternance et l'axe de bobine d'au moins une bobine (108) est disposé le long de la direction de polarisation des au moins deux aimants permanents.

6. Tête de traitement laser (10) selon une des revendications précédentes, **caractérisée en ce que** le dispositif de réglage linéaire (64, 66, 68) présente un guidage linéaire (64, 66), qui est disposée en vis-à-vis du moteur linéaire synchrone (68), dans laquelle entre le guidage linéaire (64, 66) et le moteur linéaire synchrone (68) une monture (74) pour recevoir un support de lentille (80) est montée et est guidée dans la direction de réglage du guidage linéaire (64, 66) et du moteur linéaire synchrone (68).

7. Tête de traitement laser (10) selon la revendication 6, **caractérisée en ce que** le guidage linéaire (64, 66) présente une tige de guidage (64) et un manchon de guidage (66), dans lequel ladite de guidage (64) est renfermée de manière coulissante.

8. Tête de traitement laser (10) selon la revendication 7, **caractérisée en ce que** le guidage linéaire (64, 66) est réalisé comme un palier lisse en céramique.

9. Tête de traitement laser (10) selon une des revendications 6 à 8, **caractérisée en ce que** la monture (74) pour recevoir le support de lentille (80) présente un évidement cylindrique avec un filetage interne (76) et la monture de lentille (80) est réalisée en forme de cylindre avec un filetage externe (80), dans laquelle la monture de lentille (80) peut être vissée avec son filetage externe (82) dans le filetage interne (76) de la monture (74).

10. Tête de traitement laser (10) selon la revendication 9, **caractérisée en ce que** la monture de lentille (80) présente un évidement cylindrique creux avec une portion d'épaulement (94), sur laquelle l'optique de focalisation (90, 92) est positionnée.

11. Tête de traitement laser (10) selon une des revendications précédentes, **caractérisée en ce que** les moyens de réglage pour déplacer l'optique de focalisation (90, 92) sont réalisés perpendiculairement à la direction longitudinale du rayon laser.

12. Tête de traitement laser (10) selon la revendication 11, comportant en outre une plaque frontale (22) et un cadre (20), qui renferme le dispositif de réglage linéaire (64, 66, 68), dans laquelle le cadre (20) est positionné de manière pivotante sur la plaque frontale (22).

13. Tête de traitement laser (10) selon la revendication 12, **caractérisée en ce que** le cadre (26) est positionné dans une position axiale fixe de manière pivotante sur la plaque frontale (22) de l'encastrement (18) autour d'un axe, qui s'étend en espacement parallèle à la direction longitudinale du rayon laser.

14. Tête de traitement laser (10) selon la revendication 13, **caractérisée en ce que** l'axe (40, 42) est relié fixement au cadre (20) et est guidé latéralement de manière à passer entre des pans (36, 38), quo dépassent du côté arrière de la plaque frontale (22).

15. Tête de traitement laser (10) selon la revendication 14, **caractérisée en ce que** le cadre (20) est pressé à l'aide de ressorts (50) contre le côté arrière de la plaque frontale (22).

16. Tête de traitement laser (10) selon la revendication 15, **caractérisée en ce que** les ressorts (50) sont guidés autour du cadre (20) et sont fixés par leurs extrémités sur le côté arrière de la plaque frontale (22).

17. Tête de traitement laser (10) selon une des revendications 12 à 16, **caractérisée en ce que** les moyens de réglage sont réalisés en vue d'un déplacement à plat de l'optique de focalisation comme des vis (30, 32) saillant à travers la plaque frontale (22), qui sont situés dans le plan en définissant un angle l'un par rapport à l'autre et renferment l'axe (40, 42) entre eux.
